# EUROPÄISCHE PATENTANMELDUNG

(11) **EP 0 771 763 A1**
(43) Veröffentlichungstag der Anmeldung: **07.05.1997**
(21) Anmeldenummer: 96117468.7
(22) Anmeldetag: 31.10.1996
(51) Int. Cl.: C03B 18/16

(54) **Grossformatiger Schamottestein, insbesondere Zinnbadbodenstein**

(30) Priorität: 03.11.1995 DE 19540944
(71) Anmelder: VGT Industriekeramik GmbH, 37244 Grossalmerode (DE)
(72) Erfinder: Petschauer, Hans, 37247 Grossalmerode (DE)
(74) Vertreter: Patentanwälte Rehberg + Hüppe

(57) **Zusammenfassung**

Ein großformatiger Schamottestein (1), insbesondere Zinnbadbodenstein, aus einem Werkstoff des Systems Al₂O₃ - SiO₂ weist einen blockartigen Grundkörper (2) mit einer mit dem Zinnbad in Kontakt kommenden Oberfläche (3) auf. Der blockartige Grundkörper (2) weist eine Phase (13) auf, die um die mit dem Zinnbad in Kontakt kommende Oberfläche (3) umlaufend vorgesehen ist.

## Beschreibung

Die Erfindung betrifft einen großformatigen Schamottestein, insbesondere Zinnbadbodenstein, aus einem Werkstoff des Systems Al₂O₃ - SiO₂, aus einem blockartigen Grundkörper mit einer mit dem Zinnbad in Kontakt kommenden Oberfläche. Solche großformatigen Schamottesteine besitzen streng quaderförmige Gestalt mit einer dem Zinnbad abgekehrten Oberfläche, vier Seitenflächen und einer mit dem Zinnbad in Kontakt kommenden Oberfläche. Sämtliche sechs Flächen dieser großformatigen Schamottesteine werden in einem Schleifvorgang nach dem Brennen fertig bearbeitet, wobei sie die gewünschten Abmessungen erhalten.

Solche großformatigen Schamottesteine, die der Auskleidung einer Wanne für ein Zinnbad dienen und aus einem Werkstoff des Systems Al₂O₃ - SiO₂ bestehen, sind aus der DE 42 06 734 C2 bekannt. Der hier interessierende Teil der Glasherstellungsanlage besitzt im unteren Bereich eine Stahlwanne, die mit großformatigen Schamottesteinen ausgekleidet ist. Dabei entsteht eine Wanne, die mit flüssigem Zinn gefüllt wird. Auf das Zinn wird das schmelzflüssige Glas aufgegossen, welches auf der Oberfläche des Zinnbades ausläuft und als dünnes, breites Band über das Zinnbad abgezogen wird. Auf diese Weise wird bekanntlich Flachglas hergestellt. Das Flachglas enthält ca. 15 % Na₂O. An der Berührungsfläche zwischen dem Glas und dem flüssigen Zinn diffundiert Na₂O in das flüssige Metall. Im Zinnbad liegen nun Natrium und atomarer Sauerstoff gelöst vor. Die Löslichkeit von Natrium und atomarem Sauerstoff in Zinn ist eine Funktion der Temperatur. Bei der Herstellung von Flachglas herrschen Temperaturen in der Größenordnung von 1200 °C - 600 °C. Aufgrund der thermisch und mechanisch induzierten Strömungen des flüssigen Zinns im Zinnbad werden mit Natrium beladene Volumenteile des Zinns an die mit dem Zinnbad in Kontakt kommende Oberfläche des blockartigen Grundkörpers des Schamottesteins herangetragen. So kommt es zu einem Austausch von Natrium zwischen dem Zinn und dem feuerfesten Werkstoff des Schamottesteins. Das atomare Natrium dringt in das feuerfeste Material ein und reagiert dort zuerst mit dem Siliziumdioxid der Glasphase der Schamottesteine unter Bildung von Natriumoxid. Durch die Reduktion von siliziumdioxidhaltigen Phasen erfahren die reduzierten Anteile des Schamottesteins eine graue bis schwarze Färbung.

Die bekannten Schamottesteine, die in derartigen Glasherstellungsanlagen eingesetzt werden, können eine Länge von 1000 mm, eine Breite von 600 mm und eine Höhe von 300 mm aufweisen. Sie werden aus Schamottekörnern unterschiedlicher Kornverteilung, Ton und Alkalialumosilikat aufgebaut. Nach dem Brand liegen mineralogisch gesehen hauptsächlich Mullit, etwas Cristobalit und eine Glasphase vor. Der Anteil an Glasphase eines solchen Schamottesteins wird durch den Gehalt an Natrium- und Kaliumoxid bestimmt. Ebenso beeinflussen diese Oxide wesentlich die chemische Zusammensetzung der Glasphase. Diese chemische Zusammensetzung entscheidet darüber, welche Alkalialumosilikate - Nephelin oder Albit - bei dem Angriff von metallischem Natrium in oberflächennahen Schichten des Schamottesteins gebildet werden. Der thermische Ausdehnungskoeffizient von Nephelin ist ca. vierfach größer als der Ausdehnungskoeffizient von Mullit. Es kommt daher zu einer Vergrößerung und zu einem Wachsen der Schichten im Schamottestein, die benachbart zu der mit dem Zinnbad in Kontakt kommenden Oberfläche sind. Dabei stützen sich diese Schichten infolge der streng quaderförmigen Gestalt der Schamottesteine im Verbund aneinander ab. Es entstehen entsprechende Spannungen.

Andererseits ist es erforderlich, die Fugen zwischen den auch im Bereich ihrer Seitenflächen glattgeschliffenen Oberflächen der Schamottesteine im Verband möglichst klein und damit dicht zu halten, damit das flüssige Zinn nicht durch diese Fugen nach unten hindurchtritt, wobei es zu einer Zerstörung der die Schamottesteine aufnehmenden Stahlwanne kommen kann. Da sich ein Eindringen des flüssigen Zinns in die Fuge nicht mit Sicherheit und nicht in allen Fällen vermeiden läßt, wird die Stahlwanne gekühlt, um durchdringendes Zinn in den festen Zustand zu überführen.

Durch die Volumenvergrößerung der Schichten im Bereich der mit dem Zinnbad in Kontakt kommenden Oberfläche der Schamottesteine kommt es zu Abplatzungen im Bereich dieser Schichten, die sich in den Eck- und Kantenbereichen der mit dem Zinnbad in Kontakt kommenden Oberfläche bilden. Da das keramische Material des Schamottesteins ein geringeres spezifisches Gewicht als Zinn aufweist, kommt es zu einem Aufschwimmen dieser abgeplatzten Bestandteile der Schamottesteine im Zinnbad. Dies kann zu erheblichen Produktionsstörungen bei der Glasherstellung führen.

Der Erfindung liegt die Aufgabe zugrunde, einen großformatigen Schamottestein der eingangs beschriebenen Art bereitzustellen, der bei seinem Einsatz als Auskleidung für ein Zinnbad eine reduzierte Neigung zu Abplatzungen zeigt.

Erfindungsgemäß wird dies bei dem Schamottestein der eingangs beschriebenen Art dadurch erreicht, daß der blockartige Grundkörper eine Phase aufweist, die um die mit dem Zinnbad in Kontakt kommende Oberfläche umlaufend vorgesehen ist.

Die Erfindung geht damit von dem Gedanken aus, durch die Anordnung einer umlaufenden Phase, umlaufend um die mit dem Zinnbad in Kontakt kommende Oberfläche des Schamottesteins, die gegenseitige Abstützung der oberflächennahen Schichten benachbarter Schamottesteine im Verband zu vermeiden und eine möglichst spannungsfreie Volumenvergrößerung zuzulassen, da das Eindringen von atomarem Natrium in den Grundkörper des Schamottesteins nicht verhindert werden kann. Zwar wird durch die Phase und den im Verband der Schamottesteine entstehenden, im Querschnitt doppelt großen Zwickel zwischen zwei benachbarten Schamottesteinen die Angriffsmöglichkeit für das Eindringen von atomarem Natrium begünstigt, jedoch werden dabei Flächenbereiche für das Natrium zugänglich gemacht, die bevorzugt nicht in der Ebene parallel zu der mit dem Zinnbad in Kontakt kommenden Oberfläche des Schamottesteins liegen. Diese Flächenbereiche vergrößern daher die in Rede stehende Oberfläche nicht. Auch die neuen Steine werden mörtellos nebeneinander mit einer die Wärmeausdehnung berücksichtigende Fuge verlegt, wobei somit die Seitenflächen der Schamottesteine im Betriebszustand direkt aneinander in Anlage treten. Die mit Ausnahme der Phase streng rechtwinklig ausgebildeten Schamottesteine werden sich unter Temperatureinwirkung so ausdehnen, daß sie infolge des Temperaturgradienten eine leicht trapezförmige Querschnittsgestaltung einnehmen. Am Grunde der Phase bzw. des aus zwei benachbarten Phasen entstehenden Zwickels entsteht dabei vorteilhaft ein unterhalb der Oberfläche, die dem Zinnbad ausgesetzt ist, liegender Dichtbereich, der eine höchst effektive Abdichtung der Fuge gegen den Durchtritt von Zinn nach unten bildet. Die Volumenvergrößerung wird damit an dieser Stelle für Dichtzwecke vorteilhaft ausgenutzt. Die neue und erfindungsgemäße Phase wird dabei angewendet, obwohl sich an sich die Verwendung einer Phase an dieser Stelle infolge der angestrebten Dichtwirkung verbietet. Durch die Phase wird weiterhin vorteilhaft erreicht, daß der Aufbau von Spannungen im Verband befindlicher Schamottesteine gleichsam mit Abstand und unterhalb der wesentlichen großen, mit dem Zinnbad in Kontakt kommenden Oberfläche der Schamottesteine gelegt wird. Auch ist die Strömung des flüssigen Zinns im Bereich dieser Zwickel gegenüber den übrigen Bereichen des Zinnbades eingeschränkt, so daß in diesem Bereich auch vergleichsweise weniger Natrium an die freie Oberfläche des Schamottesteins herangeführt wird.

In der mit dem Zinnbad in Kontakt kommenden Oberfläche kann eine oder mehrere Nuten angeordnet sein, die die großformatige Oberfläche in mehrere kleinformatige Oberflächen unterteilen. Durch diese Maßnahme, die insbesondere bei sehr großen Steinen angewendet werden kann, wird die dann auch relativ große, mit dem Zinnbad in Kontakt kommende Oberfläche des Schamottesteins in mehrere vergleichsweise kleinere Oberflächen unterteilt, die sich infolge der Nutenanbringung nicht mehr aneinander abstützen. Die Volumenzunahme wird damit noch besser zugelassen, wobei die Neigung zu dem Entstehen von Abplatzungen noch weiter reduziert wird. Grundsätzlich sollte die Anbringung von Nuten zusätzlich zu der Anordnung einer umlaufenden Phase erfolgen. Es ist jedoch auch möglich, auf die umlaufende Phase zu verzichten und nur Nuten in der mit dem Zinnbad in Kontakt kommenden Oberfläche des Grundkörpers des Schamottesteins anzuordnen. Dabei erscheint es sinnvoll, sich kreuzende Nuten kantennah anzuordnen, damit die sich im Verband aneinander abstützenden Flächen etwa gleichgroße Größe erhalten wie die im Mittelbereich der Oberfläche angeordneten Flächen.

Die Nuten können rechteckigen Querschnitt aufweisen. Die Anordnung von Nuten mit rechteckigem Querschnitt erlaubt eine einfache Herstellung nach dem Brennen der großformatigen Schamottesteine.

Die Nuten können eine Breite von etwa 3 bis 5 mm aufweisen. Die Nuttiefe liegt in der Regel zwischen 5 und 20 mm. Generell sind die Nuten so angeordnet, daß sie die im Grundkörper erforderlichen Löcher für die Befestigung der Schamottesteine in der Stahlwanne nicht schneiden.

Die Phase ist in der Regel tiefer als breit ausgebildet ist, d. h. die Entfernung der durch die Phase abgeschliffenen Kante in Richtung der Höhe des Schamottesteins nach unten ist größer als die Entfernung der Kante in Richtung der Länge oder Breite des Schamottesteins. Diese Gestalt der Phase, aus der sich die Gestalt des Zwickels im Verband der Schamottesteine ergibt, ist so gestaltet, daß letztlich eine Berührzone geschaffen wird, die vorteilhaft zu Dichtzwecken genutzt wird und die mit Abstand zu der Ebene angeordnet ist, in der sich die Oberfläche des Schamottesteins befindet, die im wesentlichen mit dem Zinnbad in Kontakt kommt. Für einen Schamottestein mit einer Länge von etwa 960 mm, einer Breite von etwa 608 mm und einer Höhe von etwa 305 mm sollte die Phase eine Tiefe von etwa 5 bis 20 mm und eine Breite von etwa 1 bis 8 mm aufweisen. Die Tiefe der Phase ist damit größer als die Höhe der bisher bekannten Schichtdicke der Abplatzungen.

Die Phase kann vorteilhaft angeschliffen sein. Damit ist es möglich, die Herstellung der Phase auf einfache Weise sicherzustellen, da ohnehin sämtliche Oberflächen des Grundkörpers des Schamottesteins durch Schleifen fertiggestellt werden.

Die Nuten können eingesägt werden. Auch damit ist die nachträgliche Herstellung auf einfache Weise ermöglicht.

Die Erfindung wird anhand bevorzugter Ausführungsbeispiele weiter erläutert und beschrieben. Es zeigen:
- Fig. 1: eine Seitenansicht eines Schamottesteins in einer ersten Ausführungsform,
- Fig. 2: ein Detail aus der Darstellung der Fig. 1,
- Fig. 3: eine Draufsicht auf einen Schamottestein in einer zweiten Ausführungsform,
- Fig. 4: eine Seitenansicht von Teilen zweier benachbart im Verband angeordneter Schamottesteine und
- Fig. 5: eine Draufsicht auf eine weitere Ausführungsform des Schamottesteins.

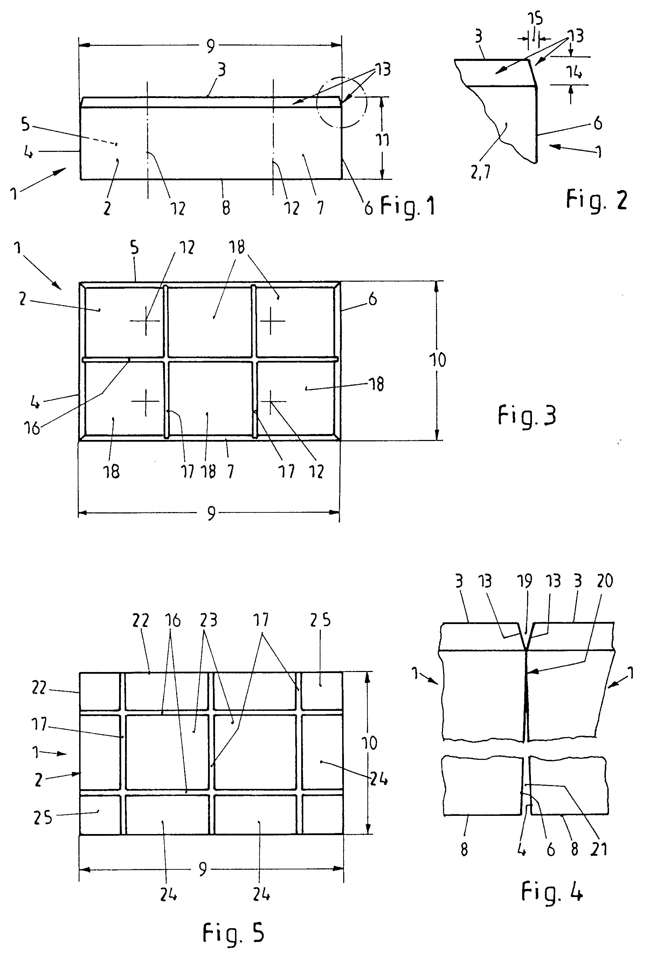

Der in Fig. 1 dargestellte Schamottestein 1 besitzt einen Grundkörper 2 in Form eines Quaders oder eines Parallelepipeds. Im Einzelnen besitzt der Grundkörper sechs Oberflächen, nämlich eine mit dem Zinnbad in Kontakt kommende Oberfläche 3, vier Seitenflächen 4, 5, 6, 7, sowie eine Grundfläche 8, die der Stahlwanne der Schmelzanlage zugekehrt angeordnet ist, wenn die Wanne mit derartigen Schamottesteinen 1 ausgekleidet ist. Der Schamottestein 1 weist eine Länge 9, eine Breite 10 und eine Höhe 11 auf. Da es sich um einen großformatigen Schamottestein 1 handelt, beträgt die Länge 9 etwa 1000 mm, die Breite 10 etwa 600 mm und die Höhe 11 etwa 300 mm. Es versteht sich, daß solche großformatigen Schamottesteine 1 auch mit abweichenden Abmessungen hergestellt werden. Der Schamottestein 1 weist weiterhin der Höhe 11 nach durchgehende Löcher auf, die hier nur durch Mittellinien 12 angedeutet sind. Diese Löcher dienen dem Verankern des Schamottesteins 1 an der Stahlwanne, um ein Aufschwimmen des Schamottesteins 1 im Zinnbad zu verhindern.

Der Grundkörper 2 des Schamottesteins 1 weist umlaufend um die mit dem Zinnbad in Kontakt kommende Oberfläche 3 im Bereich seiner Kante eine Phase 13 auf, also eine schräge Abflachung, die für die rechte obere Ecke des Schamottesteins nach Fig. 1 in Fig. 2 verdeutlicht ist. Die Phase 13 ist umlaufend um die Oberfläche 3 angeordnet, und zwar an allen vier Kanten. Sie läßt sich insbesondere durch einen Schleifvorgang an dem ansonsten parallelepipedförmigen Grundkörper 2 mit rechten Winkeln herstellen. Die Phase 13 besitzt in Richtung der Höhe 11 des Grundkörpers eine Tiefe 14 von etwa 5 - 20 mm und in Richtung der Länge 9 bzw. der Breite 10 eine Breite 15, immer gemessen von der vor der Abarbeitung der Phase 13 sich ergebenden Kante zwischen den jeweiligen Flächen.

Während das Ausführungsbeispiel der Fig. 1 und 2 einen Schamottestein 1 zeigt, der lediglich eine um die Oberfläche 3 umlaufende Phase 13 aufweist, so daß die Oberfläche 3 durch die Anordnung der Phase 13 nur vergleichsweise wenig verkleinert wird, zeigt das Ausführungsbeispiel der Fig. 3 einen Schamottestein 1, dessen Grundkörper 2 in der Oberfläche 3 eine zusätzlich angeordnete Längsnut 16 sowie zwei diese kreuzende Quernuten 17 aufweist. Die Nuten 16, 17 sind so angeordnet, daß die großformatige Oberfläche 3 des Grundkörpers 2 hier in sechs kleinformatige Oberflächen 18 gleicher oder etwa gleicher Größe unterteilt wird. Die Nuten 16, 17 sind so angeordnet, daß sie die Löcher gemäß den Mittellinien 12 nicht schneiden. Die Nuten 16 und 17 haben in der Regel rechteckigen Querschnitt und besitzen eine Tiefe, die bis zur Tiefe 14 der Phase 13 reichen kann. Ihre Breite beträgt im allgemeinen 3 - 5 mm. Durch die Aufteilung der Oberfläche 3 in die kleinformatigen Oberflächen 18 entstehen kleinere Flächen, die sich nicht aneinander abstützen. Der Aufbau der Spannungen bei Volumenzunahme von Schichten des Grundkörpers 2, die in der Nähe der Oberfläche 3 liegen, wird damit reduziert, so daß beim Einsatz der Schamottesteine 1 in Glasschmelzanlagen die Gefahr von Abplatzungen erheblich reduziert ist.

Fig. 4 zeigt eine Seitenansicht zweier im Verband nebeneinander befindlicher Schamottesteine 1. Durch die beiden Phasen 13 entsteht ein Zwickel 19 mit doppelter Querschnittsfläche, der aber immer noch tiefer als breit ausgebildet ist. Unter Temperatureinfluß werden sich die benachbarten Schamottesteine 1 infolge des über die Höhe 11 laufenden Temperaturgradienten so verformen, daß sie etwa trapezförmigen Querschnitt einnehmen. Dabei entsteht eine Dichtzone 20, die am Grunde des Zwickels 19 bzw. der Phase 13 beginnt und sich um einen gewissen Betrag in Richtung der Höhe 11 des Grundkörpers 2 nach abwärts erstreckt. Bedingt durch die in dieser Richtung abfallende Temperatur entsteht ein sich nach unten öffnender Spalt 21, der zur Verdeutlichung übertrieben groß dargestellt ist. Es ist jedoch leicht erkennbar, daß die Schamottesteine 1 bei Temperatureinwirkung im Bereich der Dichtzone 20 aneinandergepreßt werden, so daß damit dieser Bereich des Spaltes 21 bzw. der Fuge zwischen zwei benachbarten Schamottesteinen unter direkter gegenseitiger Abstützung angepreßt und abgedichtet wird. Die sich dabei aufbauenden Druckkräfte werden also nicht über die gesamte Höhe 11 des Schamottesteins 1 übertragen, sondern gezielt im Bereich der Dichtzone 20. Das flüssige Zinn des Zinnbades kommt zwar mit der Oberfläche 3 der Schamottesteine 1 in Kontakt und kann auch in den Zwickel 19 eindringen. Es wird jedoch im Bereich der Dichtzone 20 wirksam an einem Durchtritt nach unten gehindert. Es versteht sich, daß zusätzlich noch weitere Maßnahmen für die Verhinderung des Zinndurchtrittes nach unten getroffen sind, beispielsweise eine Kühlung der Stahlwanne.

Fig. 5 zeigt eine Draufsicht auf einen Schamottestein 1 ähnlich der Darstellung der Fig. 3. Es fehlt hier eine umlaufende Phase 13. Stattdessen ist hier ein Gitterwerk aus mehreren Längsnuten 16 und mehreren Quernuten 17 angeordnet. Die Nuten 16, 17 sind so im Bereich der Oberfläche 3 angeordnet, daß sie zumindest teilweise nahe der Kante 22 verlaufen. Damit entstehen aus der Oberfläche 3 Flächen 23 im Mittelbereich sowie Flächen 24 und 25, die zwar unterschiedlich groß sind, wobei sich jedoch zwei benachbarte Flächen 24 zu einer Fläche ergänzen, die etwa gleich groß wie die Flächen 23 ausgebildet ist. Wenn die Schamottesteine 1 im Verband liegen, stoßen in den Eckbereichen vier Flächen 25 aneinander, die ebenfalls wieder etwa die Größe der Fläche 23 erreichen können. Mit der Anordnung dieser Nuten 16, 17 wird die dem Zinnbad ausgesetzte Oberfläche 3 wirkungsvoll verkleinert, der Aufbau von Spannungen unter Temperatureinfluß verringert und der Gefahr des Auftretens von Abplatzungen entgegengewirkt.

### BEZUGSZEICHENLISTE

- 1 -: Schamottestein
- 2 -: Grundkörper
- 3 -: Oberfläche
- 4 -: Seitenfläche
- 5 -: Seitenfläche
- 6 -: Seitenfläche
- 7 -: Seitenfläche
- 8 -: Grundfläche
- 9 -: Länge
- 10 -: Breite
- 11 -: Höhe
- 12 -: Mittellinie
- 13 -: Phase
- 14 -: Tiefe
- 15 -: Breite
- 16 -: Längsnut
- 17 -: Quernut
- 18 -: Oberfläche
- 19 -: Zwickel
- 20 -: Dichtzone
- 21 -: Spalt
- 22 -: Kante
- 23 -: Fläche
- 24 -: Fläche
- 25 -: Fläche

## Patentansprüche

1. Großformatiger Schamottestein (1), insbesondere Zinnbadbodenstein, aus einem Werkstoff des Systems Al₂O₃ - SiO₂, aus einem blockartigen Grundkörper (2) mit einer mit dem Zinnbad in Kontakt kommenden Oberfläche (3), **dadurch gekennzeichnet**, daß der blockartige Grundkörper (2) eine Phase (13) aufweist, die um die mit dem Zinnbad in Kontakt kommende Oberfläche (3) umlaufend vorgesehen ist.

2. Schamottestein nach Anspruch 1, **dadurch gekennzeichnet**, daß in der mit dem Zinnbad in Kontakt kommenden Oberfläche (3) eine oder mehrere Nuten (16, 17) angeordnet sind, die die großformatige Oberfläche (3) in mehrere kleinformatige Oberflächen (18; 23, 24, 25) unterteilen.

3. Schamottestein nach Anspruch 2, **dadurch gekennzeichnet**, daß die Nuten (16, 17) rechteckigen Querschnitt aufweisen.

4. Schamottestein nach Anspruch 3, **dadurch gekennzeichnet**, daß die Nuten (16, 17) eine Breite von etwa 3 bis 5 mm aufweisen.

5. Schamottestein nach Anspruch 1, **dadurch gekennzeichnet**, daß die Phase (13) tiefer als breit ausgebildet ist.

6. Schamottestein nach Anspruch 5, **dadurch gekennzeichnet**, daß für einen Schamottestein (1) mit einer Länge (9) von etwa 960 mm, einer Breite (10) von etwa 600 mm und einer Höhe (11) von etwa 300 mm die Phase (13) eine Tiefe (14) von etwa 5 bis 20 mm und eine Breite (15) von etwa 1 bis 8 mm aufweist.

7. Schamottestein nach Anspruch 5 oder 6, **dadurch gekennzeichnet**, daß die Phase (13) angeschliffen ist.

8. Schamottestein nach den Ansprüchen 2 bis 4, **dadurch gekennzeichnet**, daß die Nuten (16, 17) eingesägt sind.
